# EUROPEAN PATENT APPLICATION

(11) **EP 3 379 233 A1**
(43) Date of publication of application: **26.09.2018**
(21) Application number: 16805879.0
(22) Date of filing: 27.10.2016
(51) Int. Cl.: G01N 21/23, B82Y 20/00

(54) **SENSOR, APPARATUS AND METHOD FOR DETERMINING A CONCENTRATION OF A SOLUTE IN A SOLUTION**

(30) Priority: 27.10.2015 ES 201531540
(71) Applicant: Consejo Superior de Investigaciones Científicas (CSIC), 28006 Madrid (ES); Universidad De Zaragoza, 50009 Zaragoza (ES); Universidad Politécnica de Madrid, 28040 Madrid (ES)
(72) Inventor: OLIVA RAMÍREZ, Manuel, 41092 Sevilla (ES); YUBERO VALENCIA, Francisco, 41092 Sevilla (ES); BARRANCO QUERO, Ángel, 41092 Sevilla (ES); RODRÍGUEZ GONZÁLEZ-ELIPE, Agustín, 41092 Sevilla (ES); FERNÁNDEZ LEDESMA, Luis José, 50009 Zaragoza (ES); HOLGADO BOLAÑOS, Miguel, 28040 Madrid (ES)
(74) Representative: Hoffmann Eitle
(86) International application number: PCT/ES2016/070764
(87) International publication number: WO 2017/072388

(57) **Abstract**

The document describes a sensor, apparatus and method for the direct analysis of fluids in order to determine concentration of solutes in solutions. Transductors with porous birefringent monolayer or multilayer structures (such as a planar photonic structure in the form of a Bragg microcavity) may be used as sensors.

The method of the invention can be performed in two possible implementations; a first one, wherein the sensor is a photonic crystal in a microfluidic device which comprises two transparent windows, data being retrieved in transmission mode and a second one, wherein the photonic crystal sensor is located on the tip of an optical fiber, data being retrieved in reflection mode.

## Description

### OBJECT OF THE INVENTION

The object of the invention is framed in the field of analytics. Particularly, the object of the invention addresses the determination of the concentration of a solute in a solution, said determination being carried out by means of optical methods relying on optical sensors in the form of porous thin layers.

### BACKGROUND OF THE INVENTION

There is a large variety of analytical methodologies enabling the determination of the concentration of different solutes in solutions. Thus, in industries such as the beer manufacturing and others related with the fabrication of similar drinks, the fermentation process is traditionally controlled with the aid of a pycnometer to measure the density of the solution, a parameter that later on can be correlated with the concentration of dissolved solute. As a result, this way of proceeding permits the determination of the amount of sugar in the solution during a fermentation process.

A large variety of optical methods, based for example on the determination of the optical absorption, colorimetry, fluorescence or the refractive index of the liquids, are also widely utilized to determine the concentration of solutes in solutions. In particular, the so called refractometers are commonly utilized to estimate the concentration of glucose or, in general, sugars in aqueous solutions. These instruments directly measure the refractive index of liquids, a parameter that directly correlates with the solute concentration in the case of solutions. To ensure a straightforward analysis of the refractive index, these instruments require a minimum volume of sample (i.e., liquid to be analyzed) in the order of 0.1-1.0 ml, and cannot be applied for non-transparent and turbid liquids. On the other hand, they work "ex-situ" and require delicate sampling and handling procedures to keep unaltered the liquids when they are delivered from the container to these external analytical systems.

To avoid these problems, there is a growing tendency to use microfluidic devices to analyze solutions and, in general, fluids. These systems usually incorporate inlet and outlet ports, and between them, one or more channels with dimensions between tens to hundreds microns where different analytical determinations can be carried out in a continuous mode. They present several advantages such as the use of very small solution volumes, rapid analysis, compact structure owing to the integration of various functionalities in small sizes or low mass production fabrication costs that make competitive the manufacturing of disposable chips, etc.

Different procedures can be incorporated in these microfluidic systems to determine the characteristics of the fluids filling and circulating through the microchannels. Specifically, different optical measurement methods and components can be integrated in the microchannels that, undergoing a change in their optical response when the liquid passes through or enters in contact with them, may act as transducers of the liquid properties. A well-known and widely used example for a large variety of applications is the determination of changes in the plasmonic response of nanoparticles or thin layers of metals such as gold and silver.

In microfluidics, optical detection is particularly powerful due to its non-invasive character, rapid response and, in general, high sensitivity. These advantages have promoted the use of different optical transducers that, making use of photonic structures, surface enhanced Raman or the already mentioned surface plasmon resonance, interrogate the liquid properties through the detection of a variety of optical phenomena such as absorption, fluorescence or optical interferences.

Regarding the sensors based on detecting optical interferences with photonic structures , it is worth mentioning the document US9007593 that describes a method for determining identity and quantity of analytes in a vapor. The method consists of exposing a series of stacked porous layers structured in the form of Bragg mirrors, microcavities or rugate filters to the vapors to be analyzed, following the variation of the optical response of these porous layers after applying thermal cycles. The magnitude and shape of the hysteresis processes in the optical response after the thermal cycles is correlated with the presence and amount of the different components present in the analyzed vapors.

WO2010/026269A1 discloses an optical detection system for label-free high sensitivity bioassays, which is based on the determination of the optical response in the presence of solutions (i.e., spectral response in reflection/transmission and angular dependence profiles) of three dimensional nanostructures integrated in a microfluidic device.

The present invention proposes the microfluidic integration of an optical device using for detection the induced phase shift between the electrical field components of linearly polarized incident light after being reflected or transmitted by the sensing part (i.e. sensor or transducer) of the system. This transducer consists of a porous and optically active planar photonic structure whose birefringence becomes modulated by the refractive index of the liquids infiltrated within its pores network. This photonic structure can be integrated either in a microfluidic chip with the problem solution flowing therethrough or, alternatively, on the tip of an optical fiber that is directly introduced in the problem solution.

### DESCRIPTION OF THE INVENTION

**A first aspect** of the invention refers to a sensor for the determination of the solute concentration in solutions that consists of a planar and porous photonic structure acting as transducer of the liquid properties.

**A second aspect** of the invention relates to an apparatus comprising a microfluidic device, particularly configured as a chip, which includes the planar photonic transducer or sensor referred to in the first aspect of the invention, which contacts the solution to be analyzed. For the measurements, the solution is circulated through the microfluidic chip containing the transducer that is brought in contact with the flowing solution. Said apparatus is coupled with an optoelectronic detection system that integrates a source of linearly polarized light and a series of optical components to analyze the ellipticity of the light. Overall, the whole system enables the interrogation of the liquid or solution circulating through the microfluidic device and to retrieve information of its optical properties, basically of its refractive index.

**A third aspect** of the invention relates to a method to determine the concentration of solutes in solutions that, relying on the liquid interrogation by the sensor referred to in the first aspect of the invention and the apparatus comprising the microfluidic device claimed in the second aspect of the invention with the problem solution flowing therethrough, makes use of the said previously referred optoelectronic detection system for analysis.

All the aspects of the invention are based on a sensor that acts as a transducer of the optical properties of the liquids and that is formed by a planar and optically active photonic structure made of one or more thin porous layers. These thin layers are preferentially prepared by means of physical vapor deposition techniques (evaporation or magnetron sputtering) in a glancing angle geometrical configuration between the flux of deposition material coming from a source or target and the surface of the substrates whereon the thin layers are deposited. When examined in cross section, this type of thin layers presents a tilted nanocolumnar structure defining an anisotropic porous arrangement. The final transducer may consist of either one layer of a single material or a multilayer structure where alternant layers of two different refractive index materials are sequentially stacked. An essential condition for the two cases is that the component layer(s) of the transducer present in-plane birefringence (i.e., they have two orthogonal optical axes with different refractive indices) and a high porosity.

When linearly polarized light impinges onto the transducer, infiltrated with the solution whose solute concentration is to be analyzed, and with its polarization vector misaligned with respect to the optical axes of this latter, the ellipticity of the reflected or transmitted light depends on the refractive index of the liquid infiltrating the pores and, therefore, can be taken as a measurement of the solute concentration in the case of a solution. In other words, the transducer acts as an optical retarder inducing a phase shift between the two orthogonal components of the electric field of the reflected/transmitted light that is a measure of the solute concentration in the problem solution.

A first possible configuration of the transducer consists of a single porous thin film structured in the range of nanometers (i.e. nanostructured), made of TiO₂, with a strong birefringence, preferable higher than 0.15 (i.e., with a strong optical activity), between the two optical axes on the plane of the layer. When linearly polarized light impinges onto this transducer layer with the polarization vector forming a certain angle (preferably 45°) with respect the optical axes of the layer, changes in the degree of ellipticity of the reflected/transmitted beam are a measure of the variation of the refractive index of the solution infiltrating the pore network of the optically active layer. The intensity of these variations depends on the layer birefringence, on the alignment of the polarization vector of the incident light with respect to the layer's optical axes and on the layer thickness. A way of measuring these optical changes consists of determining the ratio between the transmitted/reflected intensity of light after passing through an arrangement in which two polarizers are oriented either in a cross or an aligned configuration with respect to the direction of the light and the microfluidic device is placed between them at the said azimuthal orientation of 45°.

Another possible configuration of the sensor of this invention consists of an optical microcavity separating two Bragg mirrors (i.e., a so called Bragg microcavity) and formed by the superposition of two porous birefringent one-dimensional photonic crystals separated by another porous and birefringent layer acting as optical defect. In order to get the required interference pattern, a certain contrast is needed between the refractive index of the layers stacked in this optical system. For this purpose, it is proposed with preferred but not exclusive character, the use of SiO₂ and TiO₂ as alternant constituent materials of the layers stacked in the photonic structure. As an example, this structure might include two Bragg mirrors formed by 7 porous (50% of pore volume) and alternant layers of TiO₂ and SiO₂ of approximately 85 nm thickness, and a porous SiO₂ layer acting as optical defect with a thickness of approximately 200 nm. This photonic structure acts as a Bragg microcavity and yields an interference pattern consisting of a window of reflected light spreading between 500 and 700 nm and a narrow resonant peak of transmitted light around 600 nm. When linearly polarized light with its polarization vector forming a certain angle (preferably 45°) with respect the optical axes of the Bragg microcavity impinges onto this layer, variations in its ellipticity after reflection/transmission are a measure of the refractive index of the solution infiltrating the pores of this birefringent photonic structure. For this optical configuration, the sensitivity for analysis is maximum when using wavelength filtrated light around the position of the Bragg microcavity resonant peak.

To enhance the optical activity of the porous Bragg microcavities fabricated by physical vapor deposition at glancing angles, a preferred microstructure consists of a zig-zag topology for the directions of the tilted nanocolumns in one individual stacked layer with respect to the next. Another topology conferring optical activity to the planar Bragg microcavity consists of orienting the tilted nanocolumns of successive layers in the same direction.

In a first variant of the apparatus claimed in the second aspect of the invention, the sensor or transducer formed by the porous and optically active layer can be included in a microfluidic device with two transparent windows to retrieve the optical information either in transmission or reflection modes. In a second variant of the device claimed in the second aspect of the invention, the sensor or transducer, located inside the microfluidic device, can be interrogated directly with an optical fiber, performing analysis in reflection mode. This reflection method of detection can also be applied with the sensor or transducer placed directly on the tip of an optical fiber which, immersed directly in the solution, thereby avoides the use of the microfluidic system.

### DESCRIPTION OF THE DRAWINGS

To complete the description above, and to help to a better understanding of the characteristics of the invention, a series of drawings is presented below where, with a non-limitative but illustrative character, it is shown the following:

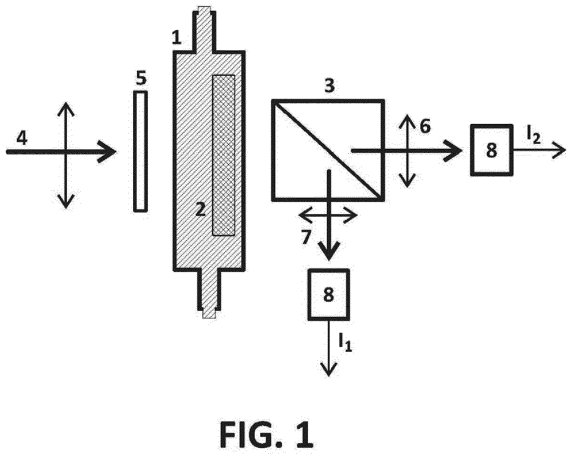

Figure 1. Scheme of the microfluidic device for the determination of glucose or other solutes in aqueous solutions working in transmission mode. In this scheme: (1) microfluidic device, (2) sensor (planar photonic transducer optically active), (3) polarization analyzer, (4) incident linearly polarized light beam, (5) optical filter, (6) transmitted light 12 with its polarization vector parallel to that of the incident beam, (7) transmitted light 11 with its polarization vector perpendicular to that of the incident beam, (8) photodiodes

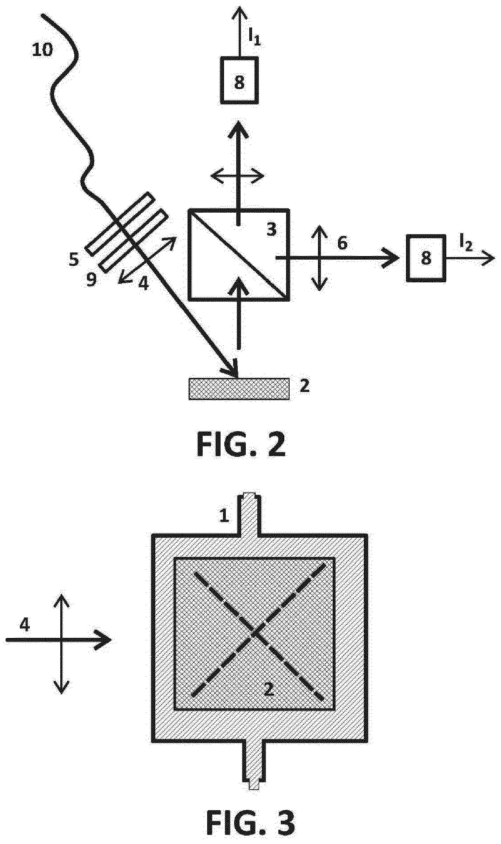

Figure 2. Scheme of the microfluidic device for the determination of glucose or other solutes in aqueous solutions working in reflection mode. In this scheme: (2) sensor (planar photonic transducer optically active), (3) polarization analyzer, (4) incident linear polarized light beam, (5) optical filter, (6) transmitted light 12 with its polarization vector parallel to that of the incident beam, (7) transmitted light 11 with its polarization vector perpendicular to that of the incident beam, (8) photodiodes, (9) polarizer, (10) optical fiber.
Figure 3. Scheme of the front view of the microfluidic device (1) including the sensor (optically active transducer, 2) with their optical axes (dashed lines) aligned 45° off the polarization vector of the incident light (4).

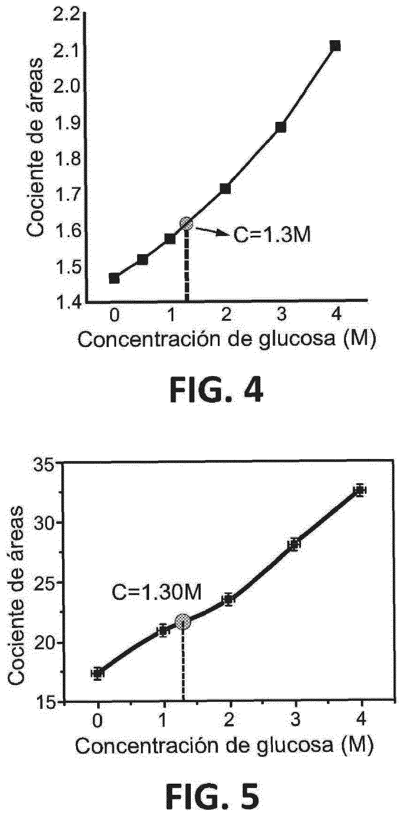

Figure 4. Calibration curve of a microfluidic device based on a simple porous birefringent thin film for the determination of glucose content in aqueous solutions working in transmission mode. The figure shows the evolution with the glucose concentration of the ratio between the transmitted intensities 11/12 defined in Figure 1.
Figure 5. Calibration curve of a microfluidic device based on a birefringent porous multilayer (Bragg microcavity) working in transmission mode for the determination of the concentration of aqueous glucose solutions. The figure shows the evolution with the glucose concentration of the ratio between the transmitted intensities 11/12 defined in Figure 1

### PREFERRED EMBODIMENT OF THE INVENTION

The first aspect of the invention refers to a sensor (2) (also called transducer) for the determination of solute concentration in solutions, formed by one or several porous optically active thin layers prepared by physical vapor deposition in a glancing geometry.

Preferably, this porous optically active thin film structure is prepared by evaporation through electron bombardment in a vacuum chamber. The distance between the vaporized target and the substrate is between 20 and 100 cm. The substrate (glass, quartz) is flat with the normal to their surface forming an angle of at least 70° with respect to the direction of the flux of atoms vaporized from the target. In an alternative embodiment with the transducer formed by a multilayer photonic structure, the substrate might remain fixed or being azimuthally turned by 180° from one layer to the next. In both cases, the porous planar photonic structure will be optically active. Other techniques of physical vapor deposition of thin layers like magnetron sputtering might also be used for the preparation of similar porous structures.

As an example of preferred embodiment of the detection method corresponding to the third aspect of the invention a photonic transducer is acting as a sensor (2). It is formed by a porous birefringent thin film of a single material (e.g. TiO₂) with a thickness between 0.2 and 3.0 microns, that was prepared in a glancing deposition geometry. It is located in a microfluidic device (1) with its optical axes 45° off the polarization vector of the incident light, as it is shown in figure 3. To maximize the sensitivity of the method it is convenient, although not limitative, to use layers with 0.15 or higher birefringence. As it is shown in figure 1, the light transmitted through the microfluidic chip, that includes the photonic transducer acting as a sensor (2), is analyzed with a polarization analyzer (3). It splits of the electric field of the transmitted light into a parallel 11 and a perpendicular 12 contribution (with respect to the polarization vector of the incident beam). The intensities of the 11 and 12 beams are measured with two photodiodes (8) to evaluate their ratio 11/12. Variations in the concentration of the solute in the solution filling the pores of the photonic transducer will show up as variations of the 11/12 ratio, as it is shown in figure 4.

As another example of preferred embodiment of the method corresponding to the third aspect of the invention a photonic transducer is acting as a sensor (2). It is formed by a porous Bragg microcavity made of a birefringent porous multilayer system of two alternating materials with different refractive index (e.g. TiO₂ and SiO₂) of about 80 nm thick with a defect in the center of the multilayer system consisting of a layer of SiO₂ of about 200 nm, all these layers having been prepared by physical vapor deposition at glancing geometry. This transducer is located in a microfluidic device (1) with their optical axes 45° off the polarization vector of the incident light, as it is shown in figure 3. In this case, the incident polarized light is filtered to a transmission window tuned to the transmission peak of the Bragg microcavity. As it is shown in figure 1, the light transmitted through the microfluidic device, including the photonic transducer that act as sensor (2), is analyzed with a polarization analyzer (3). It splits the electric field of the transmitted light into a parallel 11 and a perpendicular 12 contributions (with respect to the polarization vector of the incident beam). The intensities of the 11 and 12 beams are measured with photodiodes (8) and it is evaluated their ratio 11/12. Variations in the concentration of the solute in the solution filling the pores of the photonic transducer will show up as variations of the 11/12 ratio, as it is shown in the calibration curve in figure 5.

In an alternative embodiment of the invention, the transducer can be located on the tip of an optical fiber (10). In this case, the measured reflected light discriminates between the intensities of the components parallel 11 and perpendicular 12 with respect to the polarization vector of the incident light. From an optical point of view, these reflection measurements are compatible with the use of a microfluidic device, although they can also be done by direct immersion of the system fiber-transducer in the solution to be analyzed. An example of realization of the first embodiment is illustrated in figure 2. The incident light supplied through an optical fiber (10) is filtered (5) and polarized (9) before reaching the transducer in contact to the solution to be analyzed. The reflected light is measured with photodiodes, discriminating between the intensities of the components parallel 11 and perpendicular 12 with respect to the polarization vector of the incident light. The 11/12 ratio will be a function of the solute concentration in the aqueous solution infiltrated in the optically active porous transducer.

The calibration procedure relating the evolution of the 11/12 intensity ratio and the concentration of aqueous glucose solution is illustrated in figure 4. It shows the calibration curve of a microfluidic device based on a single porous birefringent thin layer working in transmission mode. The graph shows the variation of the 11/12 ratio as a function of the glucose concentration in the solution filling the pores of this photonic transducer.

Finally, figure 5 shows the calibration curve corresponding to a microfluidic device based on a birefringent porous multilayer Bragg microcavity working in transmission mode for the determination of glucose content in aqueous solutions. The graph shows the variation of the 11/12 ratio as a function of the glucose concentration in the solution infiltrating the pores of this photonic transducer.

In a particular embodiment, the first polarizer provides the linearly polarized light that illuminates the transducer and the second serves to select the transmitted/reflected light having a polarization vector either parallel (12) or perpendicular (11) to the polarization vector of the original beam.

It is possible to functionalize the inner part of the porous structure of the film and multilayer transducers to make them selective to particular solvents. For example, they can be made insensitive to a polar solvent (e.g. water) if such a solvent does not infiltrate within the porous structure of the photonic transducer. A functionalization enabling that only non-polar solvents can infiltrate the porous structure can be carried out by grafting non-polar molecules onto the film oxidic surfaces of these nanostructures. A functionalization of this kind will be specially suited to study mixtures of two solvents making that the optical response of the transducer only accounts for the characteristics of the non-polar solvent selectively infiltrated within the porous structure of the transducer.

## Claims

1. Sensor for the determination of solute concentrations in solutions, **characterized in that** said sensor comprises at least one porous, optically active, birefringent layer which is prepared by physical vapor deposition in a glancing geometry.

2. Sensor according to claim 1, **characterized in that** it further comprises two porous one-dimensional photonic crystals formed by birefringent layers with different refractive indexes separated by a porous central layer defining a Bragg microcavity, said crystal layers being prepared by physical vapor deposition in a glancing geometry.

3. Sensor according to claims 1 or 2, **characterized in that** the photonic crystals comprise alternant layers of SiO₂ and TiO₂.

4. Sensor according to anyone of claims 1 to 3, **characterized in that** the inner part of the pores of the porous layers are functionalized.

5. Apparatus for the determination of solute concentrations in solutions which comprises a microfluidic device (1), wherein said apparatus comprises a sensor (2) as defined in anyone of claims 1 to 4, embedded into said microfluidic device.

6. Apparatus according to claim 5, **characterized in that** said microfluidic device (1) comprises two near IR and visible range transparent windows, said sensor (2) being located between said transparent windows in the microfluidic device (1).

7. Apparatus according to claim 5, **characterized in that** the sensor (2) is located on the tip of an optical fiber insertable in the microfluidic device (1).

8. Method for the determination of solute concentrations in solutions by means of an apparatus as defined in claim 5, said method **characterized in that** it comprises:
i) contacting sensor (2) with the solution containing the solute whose concentration is to be determined,
ii) illuminating linearly polarized light onto sensor (2), once it has been infiltrated with the solution whose solute concentration is to be determined.
Iii) analyzing light transmitted through the microfluidic device by means of a polarization analyzer which splits the parallel (11) and perpendicular (12) components with respect to the polarization vector of the light beam illuminating the microfluidic device (1).
iv) determining the respective intensities (11/12) of said light beams by means of photodiodes.
v) calculating the 11/12 intensities ratio.
vi) determining solute concentration from variations in the intensities 11/12 ratio through correlation with a calibration curve.

9. Method according to claim 8, **characterized in that** the sensor (2) is integrated in a microfluidic device (1) which comprises two near IR and visible range transparent windows, said sensor (2) being located between said transparent windows, data being thereby retrieved in reflection mode.

10. Method according to claim 8, **characterized in that** the sensor (2) is located on the tip of an optical fiber which is directly introduced in the solution, data being thereby retrieved in reflection mode, by means of reflection spectra registered from polarizers in aligned or crossed configuration, resulting in spectra as function of solute concentrations.
